# EUROPÄISCHE PATENTSCHRIFT

(11) **EP 3 029 692 B1**
(45) Veröffentlichungstag und Bekanntmachung des Hinweises auf die Patenterteilung: **23.08.2017**
(21) Anmeldenummer: 15187540.8
(22) Anmeldetag: 30.09.2015
(51) Int. Cl.: H01F 41/02, H01F 3/02, H02K 1/02, H02K 15/02

(54) **VERBUNDBLECHPAKET UND VERFAHREN ZU SEINER HERSTELLUNG**
COMPOSITE SHEET METAL PACKAGE AND METHOD OF PRODUCING THE SAME
PAQUET DE TOLES COMPOSITES ET SON PROCEDE DE FABRICATION

(30) Priorität: 06.11.2014 DE 102014222655
(43) Veröffentlichungstag der Anmeldung: 08.06.2016
(73) Patentinhaber: ROBERT BOSCH GMBH, 70442 Stuttgart (DE)
(72) Erfinder: Schneider, Tobias, 70825 Korntal-Muenchingen (DE); Rammaier, Wolfgang, 71229 Leonberg (DE); Pieper, Witold, 71272 Renningen (DE)

(56) Entgegenhaltungen:
- DE-A1-102008 039 326
- JP-A- H0 461 211
- JP-A- H07 111 745

## Beschreibung

Die vorliegende Erfindung betrifft ein Verfahren zur Herstellung eines Verbundblechpakets. Weiterhin betrifft sie ein Verbundblechpaket, das mittels des erfindungsgemäßen Verfahrens hergestellt ist. Schließlich betrifft die Erfindung eine Verwendung des erfindungsgemäßen Verbundblechpakets als Rotor oder Stator einer elektrischen Maschine.

### Stand der Technik

Bei hochdrehenden elektrischen Maschinen bestehen besondere Anforderungen an die verwendeten weichmagnetischen Bleche für Stator- und Rotorpakete bezüglich Eisenverlusten (insbesondere Statorpaket) und Festigkeit (insbesondere Rotorpaket). Um eine höhere Festigkeit zu erreichen, werden höher siliziumhaltige oder höher aluminiumhaltige oder feinkörnigere Elektrobleche verwendet als dies üblicherweise der Fall ist. Zur Reduzierung der Verluste werden dünnere oder höher silizierte Bleche gewählt.

Die einzelnen Bleche der Blechpakete sind zueinander lagenisoliert. Hierzu werden zwischen Elektroblechen hochohmige Schichten eingebracht. Die Blechpakete werden mittels unterschiedlicher Verfahren wie Laserschweißen, Kleben oder Knüpfen paketiert. Dabei verbleiben allerdings Luftspalte im Blechpaket, so dass dieses in Stapelrichtung niederpermeabel ist. Magnetische Flussanteile treten in dieser Richtung in der Regel nicht auf.

Aus der DE 10 2008 039 326 A1 ist ein lamellierter magnetischer Kern bekannt. Dieser wird hergestellt, indem Elektrobleche mit einer Sol-Gel Beschichtung versehen und anschließend zu einem Blechstapel zusammengefügt werden.

Dann werden die Beschichtungen bei einer Temperatur von 600°C miteinander versintert. Allerdings findet auch in diesem Blechpaket kein magnetischer Fluss in Stapelrichtung.

JP04061211 und JP07111745 offenbaren gestapelte Schichtpakete aus abwechselnd aufeinanderfolgenden ersten Schichten eines ersten weichmagnetischen Metalls und zweiten Schichten eines zeiten weichmagnetischen Metalls.

### Offenbarung der Erfindung

Das erfindungsgemäße Verfahren zur Herstellung eines Verbundblechpakets, umfasst die folgenden Schritte:
- Bereitstellen eines gestapelten Schichtpakets aus abwechselnd aufeinanderfolgenden ersten Schichten mit einer ersten Dicke im Bereich von 0,1 mm bis 1,0 mm und zweiten Schichten mit einer zweiten Dicke im Bereich von 50 µm bis 350 µm, wobei jede erste Schicht ein erstes weichmagnetisches Metall aufweist und jede zweite Schicht ein zweites weichmagnetisches Metall mit einem spezifischen elektrischen Widerstand von mindestens 0,5 µΩm aufweist, und
- Sintern des gestapelten Schichtpakets um das Verbundblechpaket zu erhalten.

Unter einem weichmagnetischen Metall wird erfindungsgemäß ein Metall mit einer Koezitivfeldstärke H_{c} von weniger als 10 A/cm verstanden.

Die zu einem Massivkörper gesinterte Verbundstruktur aus den ersten Schichten und den zweiten Schichten zeigt eine erhöhte Festigkeit gegenüber einem aus Einzelblechen gestapelten Blechpaket. Sie unterdrückt langreichweitige Wirbelströme ebenso wie ein lagenisoliertes Blechpaket und weist damit niedrige Verluste auf. Außerdem entfallen die in einem Standardblechpaket vorhandenen Luftspalte, so dass auch magnetischer Fluss in Stapelrichtung möglich ist.

Das erste weichmagnetische Metall ist vorzugsweise ausgewählt aus der Gruppe, bestehend aus Elektroblechen, Stählen mit einem Kohlenstoffgehalt von weniger als 0,1 Gew.-%, NiFe-Legierungen und CoFe-Legierungen. Diese Materialien ermöglichen in besonders günstiger Weise die weichmagnetische Ausführung der ersten Schicht.

Unter Elektroblechen werden erfindungsgemäß Standardelektrobleche gemäß der Norm EN 10106 verstanden.

Die NiFe-Legierungen sind vorzugsweise ausgewählt aus Legierungen, die 35 bis 80 Gew.-% Nickel, 15 bis 65 Gew.-% Eisen und 0 bis 5 Gew.-% weitere Elemente enthalten. Hierbei beträgt die Gesamtsumme aller Komponenten 100 Gew.-%. Bei den weiteren Elementen kann es sich um zusätzliche Legierungselemente oder um Verunreinigungen handeln. Solche NiFe-Legierungen weisen besonders günstige weichmagnetische Eigenschaften auf.

Die CoFe-Legierungen sind vorzugsweise ausgewählt aus Legierungen, die 15 bis 50 Gew.-% Cobalt, 45 bis 85 Gew.-% Eisen und 0 bis 5 Gew.-% weitere Elemente enthalten. Die Summe aller Komponenten beträgt 100 Gew.-%. Bei den weiteren Elementen kann es sich um weitere Legierungselemente oder um Verunreinigungen handeln. Diese CoFe-Legierungen weisen besonders günstige weichmagnetische Eigenschaften auf.

Das zweite weichmagnetische Metall ist vorzugsweise ausgewählt aus SiFe-Legierungen, die 2 bis 25 Gew.-% Silizium, 74 bis 98 Gew.-% Eisen und 0 bis 1 Gew.-% weitere Elemente enthalten, aus AlFe-Legierungen, die 1 bis 8 Gew.-% Aluminium, 91 bis 99 Gew.-% Eisen und 0 bis 1 Gew.-% weitere Elemente enthalten, und aus SiAlFe-Legierungen, die 0 bis 10 Gew.-% Silizium, 1 bis 8 Gew.-% Aluminium, 81 bis 99 Gew.-% Eisen und 0 bis 1 Gew.-% weitere Elemente enthalten. Bei den weiteren Elementen handelt es sich insbesondere um Verunreinigungen. Derartige Metalle sind hochpermeabel und verlustarm und führen bei einer Verwendung des erfindungsgemäßen Verbundblechpakets als Teil einer elektrischen Maschine zu einer Verbesserung des Wirkungsgrades der elektrischen Maschine im Teillastbereich.

Die zweite Dicke beträgt vorzugsweise maximal 80 % der ersten Dicke. Indem die hochohmige zweite Schicht dünner ausgeführt wird als die erste Schicht, kommt es zu geringen Verlusten in dem erfindungsgemäßen Verbundblechpaket.

Um die Herstellung eines Verbundblechpakets technisch einfacher realisieren zu können, ist es bevorzugt, dass das Bereitstellen des gestapelten Schichtpakets die folgenden Schritte umfasst:
- Bereitstellen eines Bleches mit einer ersten Schicht und einer zweiten Schicht,
- Abtrennen mehrerer Lamellen aus dem Blech, und
- Anordnen der mehreren Lamellen aufeinander, so dass das gestapelte Schichtpaket erhalten wird, in dem abwechselnd eine zweite Schicht auf eine erste Schicht folgt.

Nachdem einmalig ein Blech mit der ersten Schicht und der zweiten Schicht hergestellt wurde, kann auf diese Weise durch das Aufeinandertügen der Lamellen in einfacher Weise das erfindungsgemäße Verbundblechpaket erhalten werden.

Das Sintern des gestapelten Schichtpakets erfolgt bevorzugt bei einer Temperatur im Bereich von 800°C bis 1400°C. Besonders bevorzugt erfolgt das Sintern bei einer Temperatur im Bereich von 1000°C bis 1300°C. Hierdurch erreicht das zu einem Massivkörper gesinterte Verbundblechpaket eine Packungsdichte von nahezu 100 %. Durch Diffusion an den Grenzflächen verbessert sich zudem die Permeabilität in den ersten Schichten.

Das erfindungsgemäße Verbundblechpaket ist mittels des erfindungsgemäßen Verfahrens hergestellt.

Das erfindungsgemäße Verbundblechpaket kann insbesondere als Rotor oder als Stator einer elektrischen Maschine verwendet werden. Es ermöglicht den Betrieb der elektrischen Maschine im Teillastbereich mit einem erhöhten Wirkungsgrad gegenüber herkömmlichen elektrischen Maschinen.

### Kurze Beschreibung der Zeichnung

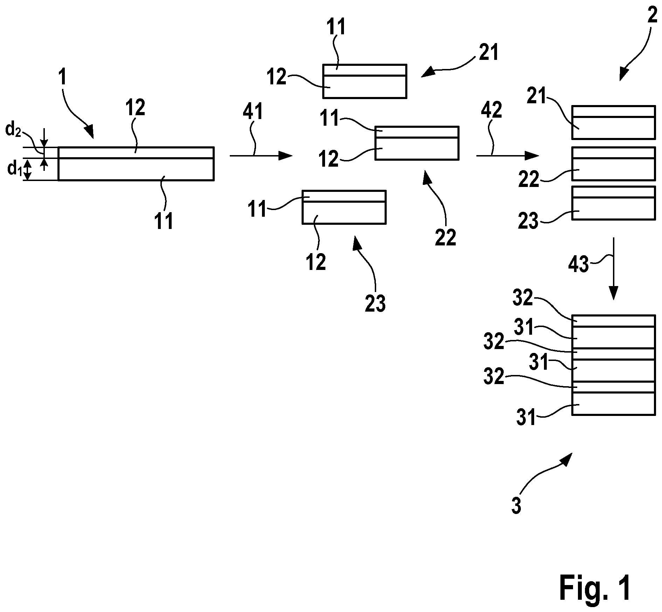

Ein Ausführungsbeispiel der Erfindung ist in der Fig. 1 dargestellt und wird in der folgenden Beschreibung näher erläutert.

Fig. 1 zeigt schematisch die Herstellung eines Verbundblechpakets in einem Ausführungsbeispiel der Erfindung.

### Ausführungsbeispiele der Erfindung

In einem Ausführungsbeispiel der Erfindung, welches schematisch in Fig. 1 dargestellt ist, wird zunächst ein Blech 1 bereitgestellt, welches aus einem M330-35 Elektroblech als erster Schicht 11 mit einer Dicke d₁ von 0,35 mm und einer darauf aufgebrachten Lage einer SiFe-Legierung als zweiter Schicht 12 mit einer Dicke d₂ von 0,1 mm besteht. Die SiFe-Legierung besteht aus 93,5 % Eisen und 6,5 % Silizium. Sowohl die erste Schicht 11 als auch die Schicht 12 sind weichmagnetisch. Während die erste Schicht 11 ein gutes weichmagnetisches Material (z.B. Standardelektroblech) ist, weist die zweite Schicht 12 einen spezifischen elektrischen Widerstand von 0,8 µΩ · m auf. Die beiden Schichten 11, 12 sind durch Platieren miteinander verbunden oder nur übereinander auf einem Coil aufgewickelt.

Ein Abtrennen 41 mehrerer Lamellen 21, 22, 23 aus dem Blech 1 erfolgt beispielsweise mittels Stanzen. Anschließend erfolgt ein Anordnen 42 der Lamellen 21, 22, 23 aufeinander, so dass ein gestapeltes Schichtpaket 2 erhalten wird, in dem abwechselnd eine zweite Schicht 12 auf eine erste Schicht 11 folgt. In diesem gestapelten Schichtpaket 2 sind noch Luftspalte zwischen den ersten Schichten 11 und den zweiten Schichten 12 jeweils benachbarter Lamellen vorhanden. Das Schichtpaket 2 wird bei einer Temperatur von 1100°C gesintert 43. Hierdurch wird ein Verbundblechpaket 3 mit einer hohen Packungsdichte erhalten. Die Luftspalte des gestapelten Schichtpakets 2 verschwinden. Zudem diffundiert das Silizium aus den zweiten Schichten 12 in die ersten Schichten 11 ein. Hierdurch weist das Verbundblechpaket 3 eine Schichtstruktur mit aus den ersten Schichten 11 hervorgegangenen dritten Schichten 31 und mit aus den zweiten Schichten 12 hervorgegangenen vierten Schichten 32 auf.

In einem zweiten Ausführungsbeispiel der Erfindung besteht die zweite Schicht 12 des Blechpakets nicht aus einer SiFe-Legierung, sondern stattdessen aus einer SiAI-Fe-Legierung mit 9 Gew.% Si, 6 Gew.-% Aluminium und als Rest Eisen.

In einem dritten Ausführungsbeispiel der Erfindung ist das M330-35 Elektroblech der ersten Schicht 11 durch eine NiFe-Legierung ersetzt, die 75 Gew.-% Nickel, 5 Gew.-% Kupfer und als Rest Eisen enthält

In einem vierten Ausführungsbeispiel der Erfindung ist das M330-35 Elektroblech der ersten Schicht 11 durch eine CoFe-Legierung ersetzt, die 48 Gew.-% Cobalt 2 Gew.% Vanadium und als Rest Eisen enthält.

Die Verbundblechpakete 3, die gemäß den voranstehenden Ausführungsbeispielen der Erfindung herstellbar sind, können in einer elektrischen Maschine als Stator oder als Rotor verwendet werden.

## Patentansprüche

1. Verfahren zur Herstellung eines Verbundblechpakets (3), umfassend die folgenden Schritte:
- Bereitstellen eines gestapelten Schichtpakets (2) aus abwechselnd aufeinanderfolgenden ersten Schichten (11) mit einer ersten Dicke (d₁) im Bereich von größer oder gleich 0,1 mm bis kleiner oder gleich 1,0 mm und zweiten Schichten (12) mit einer zweiten Dicke (d₂) im Bereich von größer oder gleich 50 µm bis kleiner oder gleich 350 µm, wobei jede erste Schicht (11) ein erstes weichmagnetisches Metall aufweist und jede zweite Schicht (12) ein zweites weichmagnetisches Metall mit einem spezifischen elektrischen Widerstand von mindestens 0,5 µΩ · m aufweist, und
- Sintern (43) des gestapelten Schichtpakets (2) um das Verbundblechpaket (3) zu erhalten.

2. Verfahren nach Anspruch 1, **dadurch gekennzeichnet, dass** das erste weichmagnetische Metall ausgewählt ist aus der Gruppe, bestehend aus Elektroblechen, Stählen mit einem Kohlenstoffgehalt von weniger als 0,1 Gew.-%, NiFe-Legierungen und CoFe-Legierungen.

3. Verfahren nach Anspruch 2, **dadurch gekennzeichnet, dass** die NiFe-Legierungen ausgewählt sind aus Legierungen, die 35 bis 80 Gew.-% Nickel, 15 bis 65 Gew.-% Eisen und 0 bis 5 Gew.-% weitere Elemente enthalten.

4. Verfahren nach einem der Ansprüche 2 oder 3, **dadurch gekennzeichnet, dass** die CoFe-Legierungen ausgewählt sind aus Legierungen, die 15 bis 50 Gew.-% Cobalt, 45 bis 85 Gew.-% Eisen und 0 bis 5 Gew.-% weitere Elemente enthalten.

5. Verfahren nach einem der Ansprüche 1 bis 4, **dadurch gekennzeichnet, dass** das zweite weichmagnetische Metall ausgewählt ist aus SiFe-Legierungen, die 2 bis 25 Gew.-% Silizium, 74 bis 98 Gew.-% Eisen und 0 bis 1 Gew.-% weitere Elemente enthalten, aus AlFe-Legierungen, die 1 bis 8 Gew.-% Aluminium, 91 bis 99 Gew.-% Eisen und 0 bis 1 Gew.-% weitere Elemente enthalten, und aus SiAlFe-Legierungen, die 0 bis 10 Gew.-% Silizium, 1 bis 8 Gew.-% Aluminium, 81 bis 99 Gew.-% Eisen und 0 bis 1 Gew.-% weitere Elemente enthalten.

6. Verfahren nach einem der Ansprüche 1 bis 5, **dadurch gekennzeichnet, dass** die zweite Dicke (d₂) maximal 80 % der ersten Dicke beträgt.

7. Verfahren nach einem der Ansprüche 1 bis 6, **dadurch gekennzeichnet, dass** das Bereitstellen des gestapelten Schichtpakets (2) die folgenden Schritte umfasst:
- Bereitstellen eines Bleches (1) mit einer ersten Schicht (11) und einer zweiten Schicht (12),
- Abtrennen (41) mehrerer Lamellen (21, 22, 23) aus dem Blech (1), und
- Anordnen (42) der mehreren Lamellen (21, 22, 23) aufeinander, so dass das gestapelte Schichtpaket (2) erhalten wird, in dem abwechselnd eine zweite Schicht (12) auf eine erste Schicht (11) folgt.

8. Verfahren nach einem der Ansprüche 1 bis 5, **dadurch gekennzeichnet, dass** das Sintern (43) des gestapelten Schichtpakets (2) bei einer Temperatur im Bereich von größer oder gleich 800°C bis kleiner oder gleich 1400°C insbesondere im Bereich von 1000°C bis 1300°C erfolgt.

9. Verbundblechpaket (3), hergestellt nach einem Verfahren gemäß einem der Ansprüche 1 bis 8, mit einem zu dem Verbundblechpaket (3) gesinterten gestapelten Schichtpaket (2) aus abwechselnd aufeinanderfolgenden ersten Schichten (11) mit einer ersten Dicke (d₁) im Bereich von größer oder gleich 0,1 mm bis kleiner oder gleich 1,0 mm und zweiten Schichten (12) mit einer zweiten Dicke (d₂) im Bereich von größer oder gleich 50 µm bis kleiner oder gleich 350 µm, wobei jede erste Schicht (11) ein erstes weichmagnetisches Metall aufweist und jede zweite Schicht (12) ein zweites weichmagnetisches Metall mit einem spezifischen elektrischen Widerstand von mindestens 0,5 µΩ · m aufweist.

10. Verwendung eines Verbundblechpakets (3) nach Anspruch 9 als Rotor oder Stator einer elektrischen Maschine.

## Claims

1. Method for producing a composite sheet metal package (3), comprising the following steps:
- preparing a stacked layer package (2) of alternating first layers (11) having a first thickness (d₁) in the range from greater than or equal to 0.1 mm to less than or equal to 1.0 mm, and second layers (12) having a second thickness (d₂) in the range from greater than or equal to 50 µm to less than or equal to 350 µm, wherein each first layer (11) has a first soft-magnetic metal and each second layer (12) has a second soft-magnetic metal having a specific electrical resistance of at least 0.5 µΩ·m, and
- sintering (43) the stacked layer package (2) in order to obtain the composite sheet metal package (3).

2. Method according to Claim 1, **characterized in that** the first soft-magnetic metal is selected from the group consisting of electrical steels, steels having a carbon content of less than 0.1 wt%, NiFe alloys and CoFe alloys.

3. Method according to Claim 2, **characterized in that** the NiFe alloys are selected from alloys containing 35 to 80 wt% of nickel, 15 to 65 wt% of iron and 0 to 5 wt% of other elements.

4. Method according to either of Claims 2 and 3, **characterized in that** the CoFe alloys are selected from alloys containing 15 to 50 wt% of cobalt, 45 to 85 wt% of iron and 0 to 5 wt% of other elements.

5. Method according to one of Claims 1 to 4, **characterized in that** the second soft-magnetic metal is selected from SiFe alloys containing 2 to 25 wt% of silicon, 74 to 98 wt% of iron and 0 to 1 wt% of other elements, from AlFe alloys containing 1 to 8 wt% of aluminium, 91 to 99 wt% of iron and 0 to 1 wt% of other elements, and from SiAlFe alloys containing 0 to 10 wt% of silicon, 1 to 8 wt% of aluminium, 81 to 99 wt% of iron and 0 to 1 wt% of other elements.

6. Method according to one of Claims 1 to 5, **characterized in that** the second thickness (d₂) is at most 80% of the first thickness.

7. Method according to one of Claims 1 to 6, **characterized in that** the preparation of the stacked layer package (2) comprises the following steps:
- providing a metal sheet (1) with a first layer (11) and a second layer (12),
- separating (41) multiple lamellae (21, 22, 23) from the metal sheet (1), and
- arranging (42) the multiple lamellae (21, 22, 23) on top of one another so as to obtain the stacked layer package (2) in which, in alternation, a second layer (12) follows a first layer (11).

8. Method according to one of Claims 1 to 5, **characterized in that** the sintering (43) of the stacked layer package (2) takes place at a temperature in the range from greater than or equal to 800°C to less than or equal to 1400°C, in particular in the range from 1000°C to 1300°C.

9. Composite sheet metal package (3) produced in accordance with a method according to one of Claims 1 to 8, with a stacked layer package (2) which has been sintered to give the composite sheet metal package (3) and consists of alternating first layers (11) having a first thickness (d₁) in the range from greater than or equal to 0.1 mm to less than or equal to 1.0 mm, and second layers (12) having a second thickness (d₂) in the range from greater than or equal to 50 µm to less than or equal to 350 µm, wherein each first layer (11) has a first soft-magnetic metal and each second layer (12) has a second soft-magnetic metal having a specific electrical resistance of at least 0.5 µΩ·m.

10. Use of a composite sheet metal package (3) according to Claim 9 as a rotor or stator of an electrical machine.

## Revendications

1. Procédé destiné à la fabrication d'un ensemble de matériau en feuille composite (3), comprenant les phases suivantes :
- la préparation d'un ensemble de couches (2) empilées à partir de premières couches (11), lesquelles présentent une première épaisseur (d₁) située dans une plage comprise entre supérieure ou égale à 0,1 mm et inférieure ou égale à 1,0 mm, qui se succèdent en alternance avec des deuxièmes couches (12), lesquelles présentent une deuxième épaisseur (d₂) située dans une plage comprise entre supérieure ou égale à 50 µm et inférieure ou égale à 350 µm, selon lequel chaque première couche (11) présente un premier métal magnétique mou et chaque deuxième couche (12) présente un deuxième métal magnétique mou avec une résistance électrique spécifique d'au moins 0,5 µΩ·m ; et
- le frittage (43) de l'ensemble de couches (2) empilées en vue d'obtenir l'ensemble de matériau en feuille composite (3).

2. Procédé selon la revendication 1, **caractérisé en ce que** le premier métal magnétique mou est sélectionné à partir du groupe constitué par les tôles magnétiques, les aciers avec une teneur en carbone inférieure à 0,1 % en poids, les alliages de NiFe et les alliages de CoFe.

3. Procédé selon la revendication 2, **caractérisé en ce que** les alliages de NiFe sont sélectionnés à partir d'alliages qui contiennent entre 35 et 80 % en poids de nickel, entre 15 et 65 % en poids de fer et entre 0 et 5 % en poids d'autres éléments.

4. Procédé selon l'une des revendications 2 ou 3, **caractérisé en ce que** les alliages CoFe sont sélectionnés à partir d'alliages qui contiennent entre 15 et 50 % en poids de cobalt, entre 45 et 85 % en poids de fer et entre 0 et 5 % en poids d'autres éléments.

5. Procédé selon l'une des revendications 1 à 4, **caractérisé en ce que** le deuxième métal magnétique mou est sélectionné à partir d'alliages de SiFe qui contiennent entre 2 et 25 % en poids de silice, entre 74 et 98 % en poids de fer et entre 0 et 1 % en poids d'autres éléments, à partir d'alliages de AlFe qui contiennent entre 1 et 8 % en poids d'aluminium, entre 91 et 99 % en poids de fer et entre 0 et 1 % en poids d'autres éléments, ainsi qu'à partir d'alliages de SiAlFe qui contiennent entre 0 et 10 % en poids de silice, entre 1 et 8 % en poids d'aluminium, entre 81 et 99 % en poids de fer et entre 0 à 1 % en poids d'autres éléments.

6. Procédé selon l'une des revendications 1 à 5, **caractérisé en ce que** la deuxième épaisseur (d₂) s'élève au plus à 80 % de la première épaisseur.

7. Procédé selon l'une des revendications 1 à 6, **caractérisé en ce que** la préparation de l'ensemble de couches (2) empilées comprend les phases suivantes :
- la préparation d'un matériau en feuille (1) avec une première couche (11) et avec une deuxième couche (12) ;
- la séparation (41) de plusieurs lamelles (21, 22, 23) à partir du matériau en feuille (1) ; et
- la disposition (42) des plusieurs lamelles (21, 22, 23) les unes sur les autres, de telle sorte que l'ensemble de couches (2) empilées est obtenu en faisant se succéder en alternance une deuxième couche (12) sur une première couche (11).

8. Procédé selon l'une des revendications 1 à 5, **caractérisé en ce que** le frittage (43) de l'ensemble de couches (2) empilées est réalisé à une température située dans une plage comprise entre supérieure ou égale à 800 °C et inférieure ou égale à 1400 °C, en particulier située dans une plage comprise entre 1000 °C et 1300 °C.

9. Ensemble de matériau en feuille composite (3), fabriqué conformément à un procédé selon l'une des revendications 1 à 8, avec un ensemble de couches (2) empilées qui est fritté pour donner lieu audit ensemble de matériau en feuille composite (3), lequel ensemble de couches empilées est formé à partir de premières couches (11), lesquelles présentent une première épaisseur (d₁) située dans une plage comprise entre supérieure ou égale à 0,1 mm et inférieure ou égale à 1,0 mm, qui se succèdent en alternance avec des deuxièmes couches (12), lesquelles présentent une deuxième épaisseur (d₂) située dans une plage comprise entre supérieure ou égale à 50 µm et inférieure ou égale à 350 µm, selon lequel chaque première couche (11) présente un premier métal magnétique mou et chaque deuxième couche (12) présente un deuxième métal magnétique mou avec une résistance électrique spécifique d'au moins 0,5 µΩ·m.

10. Utilisation d'un ensemble de matériau en feuille composite (3) selon la revendication 9 qui se présente sous la forme d'un rotor ou d'un stator d'une machine électrique.
